# FASCICULE DE BREVET EUROPEEN

(11) **EP 3 921 689 B1**
(45) Date de publication et mention de la délivrance du brevet: **05.03.2025**
(21) Numéro de dépôt: 19832647.2
(22) Date de dépôt: 18.12.2019
(51) Int. Cl.: G02B 23/12, G02B 27/01, A42B 3/04

(54) **SYSTEME DE VISUALISATION DE CASQUE COMPORTANT UN VISUEL DE CASQUE ET UNE VISIERE MOBILE COMPATIBLE DE L'UTILISATION DE JUMELLES**
HELMMONTIERTES ANZEIGESYSTEM MIT EINEM HELMARTIGEN DISPLAY UND EINEM MIT DER VERWENDUNG EINES FERNGLASES KOMPATIBLEN BEWEGLICHEN SCHIRM
HELMET-MOUNTED DISPLAY SYSTEM COMPRISING A HELMET-MOUNTED DISPLAY AND A MOVABLE VISOR COMPATIBLE WITH THE USE OF BINOCULARS

(30) Priorité: 07.02.2019 FR 1901161
(43) Date de publication de la demande: 15.12.2021
(73) Titulaire: THALES, 92400 Courbevoie (FR)
(72) Inventeur: BAUDOU, Joël, 33700 Merignac (FR); BALET, Mathieu, 33700 Merignac (FR)
(74) Mandataire: Atout PI Laplace
(86) Numéro de dépôt international: PCT/EP2019/086054
(87) Numéro de publication internationale: WO 2020/160825

(56) Documents cités:
- EP-A1- 2 346 365
- CAMERON ALEX ED - MARASCO PETER L ET AL: "Optical waveguide technology and its application in head-mounted displays", HEAD- AND HELMET-MOUNTED DISPLAYS XVII; AND DISPLAY TECHNOLOGIES AND APPLICATIONS FOR DEFENSE, SECURITY, AND AVIONICS VI, SPIE, 1000 20TH ST. BELLINGHAM WA 98225-6705 USA, vol. 8383, no. 1, 11 May 2012 (2012-05-11), pages 1 - 11, XP060003091, DOI: 10.1117/12.923660
- ATAC ROBERT ET AL: "Binocular Scorpion helmet-mounted display", HEAD- AND HELMET-MOUNTED DISPLAYS XVI: DESIGN AND APPLICATIONS, SPIE, 1000 20TH ST. BELLINGHAM WA 98225-6705 USA, vol. 8041, no. 1, 13 May 2011 (2011-05-13), pages 1 - 5, XP060014317, DOI: 10.1117/12.884547
- SPIE, PO BOX 10 BELLINGHAM WA 98227-0010 USA, 31 December 2006 (2006-12-31), XP040224649

## Description

Le domaine technique de l'invention est celui des systèmes de visualisation de casque pour pilotes d'aéronef. Plus précisément, le domaine de l'invention est celui des systèmes combinant, à la fois, des jumelles et un viseur ou un visuel de casque.

Un casque de pilote peut comporter trois équipements de visualisation différents. Il s'agit d'une visière de protection, d'un viseur ou d'un visuel de casque et des jumelles qui peuvent être des jumelles de vision nocturne. Dans la suite de la description, on parlera de visuel de casque pour désigner indistinctement un viseur de casque ou un visuel de casque. On utilisera également l'acronyme « JVN » pour désigner les jumelles de vision nocturne.

Les jumelles de vision nocturne captent la luminosité des objets dans le proche infrarouge et restituent une image visible grâce à des dispositifs d'intensification de lumière. Elles comportent deux corps identiques. Chacun des corps comportent trois parties principales qui sont un objectif, le dispositif à intensificateur de lumière et un oculaire. Le champ visuel des JVN donné par l'oculaire a généralement un diamètre de 40 degrés. Pour voir la totalité de l'image intensifiée, l'oculaire des JVN se place généralement à 25 millimètres environ de l'œil.

Un visuel de casque présente une image synthétique ou vidéo à l'infini en superposition sur l'extérieur au moyen d'une optique de projection et d'un combineur ou mélangeur optique. L'image provient généralement d'un écran plat comportant une source d'éclairage et sa carte électronique de pilotage. L'optique de projection assure la collimation de l'image diffusée dans le combineur. Le combineur peut être intégré à la visière du casque. Il peut également être intégré au visuel de casque. Pour réduire les dimensions de cet élément, on utilise des combineurs à expansion de pupille. Le combineur est alors une lame optique constituée d'une pluralité de prismes réfléchissants vers l'œil la lumière de l'image synthétique.

Une des difficultés est de faire fonctionner simultanément les JVN et le visuel de casque. Compte-tenu de leurs dimensions, l'emploi de JVN exclut la possibilité d'abaisser la visière du casque. Par conséquent, les visuels de casque mettant en œuvre des solutions optiques à combineur intégré à la visière sont incompatibles du port des JVN.

Pour résoudre ce problème, une première solution consiste à intégrer au niveau d'un des oculaires des JVN un afficheur, l'oculaire réalisant la superposition de l'image intensifiée et de celle synthétique de l'afficheur. L'inconvénient de cette solution est qu'en utilisation de jour, il est nécessaire de disposer d'un second visuel de casque autonome. Les coûts sont donc plus importants et le passage à la vision nocturne en vol est nécessairement plus délicat à opérer.

Une seconde solution est présentée dans la publication US 2012/0120482 intitulée « Modular day mode/ night mode helmet-mounted display ». Cette solution permet l'utilisation simultanée du visuel de casque et des JVN grâce à un dispositif d'affichage à combineur mince à expansion de pupille, ce combineur se plaçant entre l'œil et les JVN, au plus près de l'oculaire.

De jour, un module visière se place sur le casque et de nuit, le module visière est remplacé par les JVN. Le casque est constitué d'un casque de vol dont la visière est retirée et des réceptacles pour le module du visuel de casque sont ajoutés.

Le principal inconvénient de ce principe est la complexité du passage du mode jour au mode nuit avec la nécessité de stocker momentanément deux modules dans le cockpit. Ce stockage nécessite de disposer d'emplacements à proximité du pilote, ce qui est rarement le cas dans des cockpits d'avion ou d'hélicoptères légers.

Un autre inconvénient de ce système est lié à l'inclinaison latérale du dispositif d'affichage du visuel de casque pour permettre le montage des JVN. Cette inclinaison du dispositif d'affichage ne permet pas d'utiliser la totalité du champ disponible car l'image doit être redimensionnée pour ne pas perturber la vision et l'interprétation du pilote avec des contours inclinés de l'image synthétique.

Le système de visualisation selon l'invention ne présente pas les inconvénients précédents. Il possède deux avantages principaux. Il permet de mettre en place les jumelles de vision nocturne sans avoir à retirer la visière de jour. Il suffit de la relever. Il est possible de l'adapter sur un casque standard sans avoir à modifier la coque ou la visière existante, permettant de réaliser ainsi des économies importantes sur le coût du dispositif.

Plus précisément, l'invention concerne un système selon la revendiication 1.

Avantageusement, le dispositif de visualisation comporte un écran plat d'affichage, sa source d'éclairage, une optique de collimation et un combineur optique à expansion de pupille.

Avantageusement, les jumelles sont des jumelles de vision de nuit et comportent deux corps identiques, chaque corps comportant un oculaire, lorsque le support de fixation des jumelles de vision de nuit est monté dans l'ensemble de fixation, le combineur à expansion de pupille se trouve entre un œil de l'utilisateur et un des deux oculaires.

Avantageusement, l'ensemble de fixation des jumelles comporte une rainure en T et en ce que le support de fixation des jumelles comporte une glissière adaptée à la rainure en T.

Avantageusement, l'ensemble de fixation des jumelles comporte une lame ressort qui maintient la glissière lorsque celle-ci est engagée dans la rainure en T.

Avantageusement, les jumelles de vision de nuit comportant une alimentation électrique, celle-ci est intégrée au support de fixation.

Avantageusement, les jumelles de vision de nuit comportant une alimentation électrique, celle-ci est intégrée à l'arceau mécanique, l'ensemble de fixation comportant des moyens de connexion électrique.

Avantageusement, les jumelles de vision de nuit comportant une alimentation électrique, celle-ci est issue de l'alimentation électrique du dispositif de visualisation.

Avantageusement, le support de fixation des jumelles comporte des moyens de réglage en translation vertical, des moyens de réglage en translation latéral ou en écart interpupillaire, des moyens de réglages en translation longitudinal et des moyens de réglage en rotation selon un axe parallèle à l'axe passant par les deux yeux.

Avantageusement, au moins la course du réglage en translation longitudinale est suffisante pour permettre la mise en place de l'oculaire devant le combineur optique.

Avantageusement, le dispositif optique de détection de position comporte une caméra disposée dans la partie haute de l'arceau mécanique.

Les dessins annexés illustrent l'invention :
[FIG.1] représente une vue en perspective d'un éclaté du système de visualisation dans son fonctionnement de jour, sans les jumelles de vision de nuit ;
[FIG.2] représente une vue en perspective d'un éclaté du système de visualisation dans son fonctionnement de nuit, avec les jumelles de vision de nuit ;
[FIG.3] représente une vue en perspective du support de fixation des jumelles de vision de nuit ;
[FIG.4] représente une vue latérale du montage du support de fixation dans son ensemble de fixation ;
[FIG.5] représente une vue latérale du casque équipé de son dispositif de visualisation en mode jour, visière baissée ;
[FIG.6] représente une vue latérale du casque équipé de son dispositif de visualisation et des jumelles de vision de nuit en mode nuit, visière relevée.

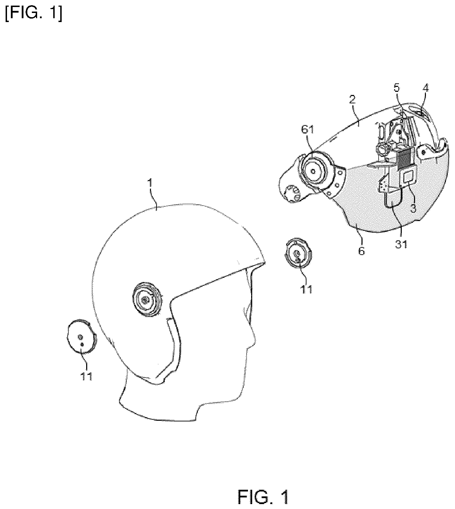

A titre d'exemple non limitatif, les différentes figures 1 à 6 représentent, dans différentes vues en perspective ou de profil, une configuration d'un système de visualisation selon l'invention. Ce système de visualisation comporte des jumelles. Celles-ci peuvent être des jumelles de jour ou des jumelles de nuit. Lorsque les jumelles sont des jumelles de jour, elles ont un grossissement différent de 1. Dans ce qui suit et à titre d'exemple non limitatif, on considère que les jumelles sont des jumelles de nuit à intensificateur de lumière. Généralement, leur grossissement est de 1.

Le système de visualisation de casque représenté comporte essentiellement :
- un casque 1 ;
- un arceau mécanique 2 monté fixe sur la partie frontale du casque ; ledit arceau comportant :
   o un dispositif de visualisation 3 comportant un combineur à expansion de pupille 31 ;
   o un dispositif optique de détection de position 4 ;
   o un ensemble de fixation 5 de jumelles de vision nocturne ;
   o une visière mobile 6 ;
- des jumelles de vision de nuit 7 détachables comportant :
   o deux corps 8 identiques assurant l'amplification de la lumière ;
   o des moyens de réglages 9 ;
   o un support de fixation 10 sur l'arceau mécanique 2.

Ces différents sous-ensembles sont détaillés ci-dessous.

Le casque 1 peut être un casque standard adapté spécifiquement pour le système de visualisation selon l'invention. Il comporte essentiellement une coque de protection. Pour s'adapter aux différentes morphologies des têtes humaines, cette coque existe en plusieurs tailles. De la même façon, la coque comporte un revêtement en mousse dont l'épaisseur peut être adaptée en fonction de la morphologie de la tête.

L'arceau mécanique 2 a une forme courbe de façon à s'adapter au mieux à la forme du casque.

L'arceau mécanique 2 est monté fixe sur la partie avant frontale du casque au-dessus des yeux de l'utilisateur. Les fixations de la structure mécanique de l'arceau sur le casque sont adaptées à la forme du casque et au mode de montage de sa visière. Pour minimiser le nombre d'arceaux différents, sa structure mécanique est réalisée en une seule taille compatible de la plus grande taille de casque et de visière. Des entretoises 11 ajoutées aux interfaces de montage de l'arceau compensent les différentes formes et les différentes tailles de casque. Elles sont représentées sur la figure 1.

L'arceau mécanique 2 sert de support à quatre sous-ensembles qui sont un dispositif de visualisation 3, un dispositif optique de détection de position 4, un ensemble de fixation 5 des jumelles de vision de nuit et une visière mobile 6. Sur les différentes figures, le dispositif de visualisation 3 est monté à droite, l'ensemble de fixation 5 est monté au centre et légèrement décalé vers la gauche et le dispositif optique de détection de position est monté sur la partie haute et gauche de l'arceau 2. D'autres dispositions sont possibles en fonction de la structure des différents sous-ensembles et de la configuration du cockpit. Le dispositif de visualisation est monoculaire. Il serait possible d'envisager une version binoculaire.

Le dispositif de visualisation 3 comporte un micro-afficheur à haute résolution qui affiche une image synthétique ou une image vidéo, sa source d'éclairage et sa carte électronique de pilotage. Une optique de collimation forme du micro-afficheur une image à l'infini. Un combineur à expansion de pupille 31 renvoie cette image vers l'œil de l'utilisateur. Le champ de visualisation du dispositif de visualisation est généralement rectangulaire.

L'ensemble du dispositif de visualisation a ainsi un encombrement réduit et peut se loger sous la visière et être compatible de l'utilisation des jumelles.

Un combineur à expansion de pupille est une lame optique mince à faces planes et parallèles dans laquelle est insérée une pluralité de lames semi-réfléchissantes inclinées et parallèles entre elles. L'épaisseur du combineur est de quelques millimètres. Grâce à cette disposition, il est possible d'obtenir, dans un encombrement réduit, une pupille de dimensions suffisantes pour l'observation. La distance séparant le combineur de l'œil est de l'ordre de 25 millimètres. Ce calage peut être obtenu en modifiant l'épaisseur du revêtement interne de la coque.

Le dispositif de visualisation peut comporter également des réglages permettant de compenser les variations d'écart interpupillaire existant entre les différents observateurs ainsi que les écarts verticaux de distance entre les yeux et le sommet du crâne. Ces écarts sont compris entre deux et trois centimètres entre différents utilisateurs.

Le dispositif optique de détection 4 de position a plusieurs utilités. Il permet de recaler l'image affichée par le dispositif de visualisation. Il permet d'asservir un certain nombre de systèmes embarqués sur l'aéronef, tels que certains capteurs d'imagerie ou certains systèmes d'arme.

A titre d'exemple, ce dispositif est une micro-caméra à grand champ et haute résolution qui détecte des mires spécifiques disposées à des emplacements connus du cockpit. La position et l'orientation de l'image de ces mires permet de déterminer la position et l'orientation de la caméra et, par conséquent du casque sur lequel la caméra est montée. Il est donc essentiel que la visière ne recouvre pas cette caméra. Bien entendu, le système de visualisation selon l'invention n'est pas restreint à ce seul type de détection de position.

Il est essentiel que l'ensemble de fixation des jumelles qui doit s'accoupler avec le dispositif de fixation desdites jumelles soit simple à réaliser et qu'il permette un accrochage facile et rapide des jumelles. Il existe différents dispositifs de montage rapide du support des JVN sur différents casques.

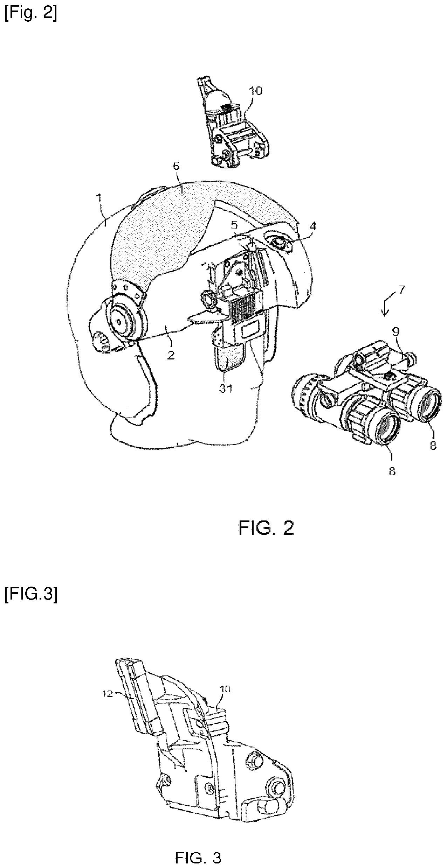

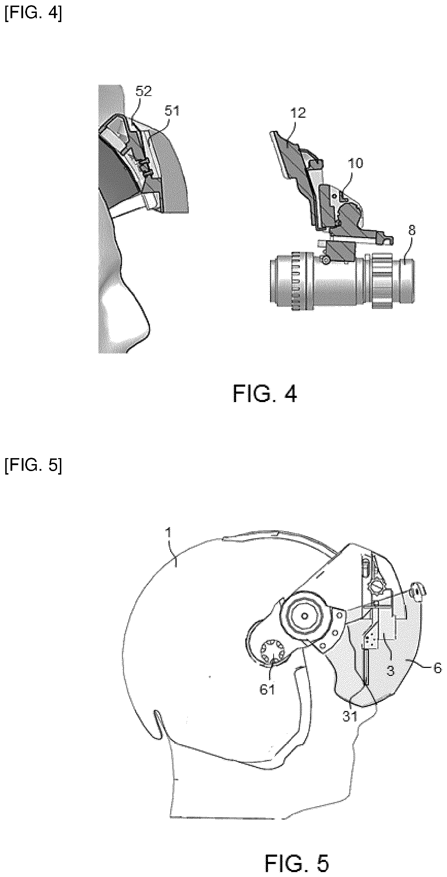

A titre d'exemple, le montage rapide présenté, notamment sur les figures 3 et 4, est plus étroit que les dispositifs existants et est légèrement déporté sur le côté gauche du casque à cause de la présence du dispositif optique de détection 4 et du dispositif de visualisation 3 disposé devant l'œil droit de l'utilisateur.

Ce montage rapide est constitué d'une glissière 12 en forme de T préalablement assemblée au dos du support 10 des jumelles de vision de nuit et d'une rainure 51 en forme de T disposée dans la structure mécanique de l'arceau. Une lame ressort escamotable 52 retient la glissière 12 lorsqu'elle est engagée totalement dans la rainure 51.

La visière mobile 6 est, classiquement de forme courbe. Elle a une fonction de protection mécanique et optique. Elle peut être teintée pour constituer une visière solaire ou anti-laser. Si le casque est un casque standard adapté, il est avantageux d'utiliser la visière initiale du casque en la réimplantant à une autre position que sa position initiale. On évite ainsi les coûts de développement et d'achat d'une visière spécifique.

Cette visière comporte deux pivots 61 latéraux permettant de l'entraîner en rotation autour d'un axe perpendiculaire à un plan de coupe longitudinal du casque. Ces pivots 61 sont montés sur l'arceau mécanique.

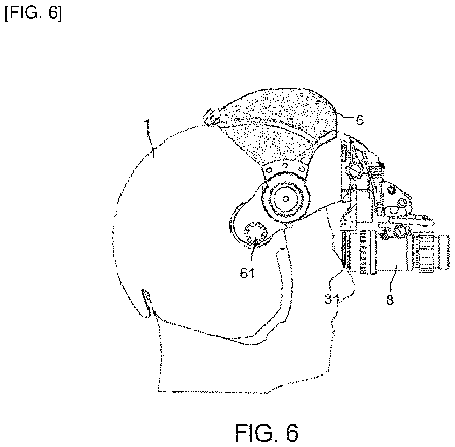

. La positon des pivots 61 est importante. Ils sont disposés en latéral au niveau du front de l'utilisateur. En effet, les pivots doivent être disposés de façon :
- qu'en position basse, les jumelles de vision de nuit n'étant pas montées sur le casque, la visière 6 couvre le dispositif de visualisation 3 et protège les yeux du pilote tout en laissant libre la caméra 4 du dispositif optique de détection. Il est à noter que la protection visuelle vers le haut est assurée par la partie basse de l'arceau. La vue de profil de la figure 5 correspond à cette position de la visière 6,
- qu'en position haute, la visière 6 étant disposée sur le sommet du casque et les jumelles de vision de nuit étant montées, la visière ne couvre pas cette même caméra 4. La vue de profil de la figure 6 correspond à cette position de la visière.

Cette disposition permet de garder constamment la visière sur le casque, aussi bien en utilisation de jour qu'en utilisation de nuit.

Les jumelles de vision de nuit 7 détachables comportent deux corps 8 identiques assurant l'amplification de la lumière, des moyens de réglages 9 et un support de fixation 10 sur l'arceau mécanique 2.

Lorsque les jumelles sont des jumelles de vision de nuit, chaque corps de jumelles 8 comporte, dans cet ordre, un objectif, un dispositif amplificateur de lumière de l'image donnée par l'objectif et un oculaire formant de l'image intensifiée une image à l'infini.

Lorsque les jumelles de nuit 7 sont montées sur l'arceau 2, il est impératif que les pupilles des oculaires soient le mieux possible centrées sur les pupilles des yeux du pilote. Compte-tenu des différences morphologiques entre les différents utilisateurs, des réglages sont nécessaires pour obtenir ce résultat. Les jumelles de vision de nuit comportent généralement quatre axes de réglages qui sont un un réglage vertical, un réglage latéral, un réglage longitudinal et un réglage angulaire.

La course de réglage vertical est généralement de 30 millimètres environ, la course de réglage latéral ou d'écart inter pupillaire est généralement supérieure à 20 millimètres, la course de réglage longitudinal est généralement supérieure à 25 millimètres et le réglage angulaire dans le plan vertical est généralement de l'ordre de plus ou moins 10°.

Afin de dégager le maximum de place pour le dispositif de visualisation entre le casque et le support des jumelles, les réglages d'inclinaison et longitudinal sont déplacés au maximum de leur course et l'oculaire des jumelles est placé contre le combineur 31 également à 25 millimètres de l'œil.

Le support 10 de fixation des jumelles de vision de nuit est représenté sur la vue en perspective de la figure 3 et sur la vue latérale de la figure 4. Comme il a été dit, ce support 10 s'accouple sur l'ensemble de fixation 5 des jumelles au moyen d'un système glissière (12) - rainure (51), permettant ainsi un montage rapide et simple.

L'alimentation électrique des JVN est réalisée par des piles qui peuvent être intégrée au support 10 de fixation des JVN ou dans un boitier à l'arrière du casque 1. Dans ce dernier cas, des contacts électriques implantés au fond de la rainure 51 de l'arceau réalisent la connexion avec la glissière 12.

Dans un autre mode de réalisation, les piles peuvent être intégrées dans la structure mécanique de l'arceau, de part et d'autres du dispositif de visualisation et de la détection de position.

Dans un troisième mode de réalisation, l'alimentation des JVN peut être réalisée par le câble et le calculateur du dispositif de visualisation.

## Revendications

1. Système destiné à être porté par un utilisateur et comportant un dispositif de visualisation, ledit système comprenant :
- un casque (1) ;
- un arceau mécanique (2) monté fixe sur la partie frontale dudit casque, ledit arceau comportant :
o un dispositif de visualisation (3) comportant un combineur (31);
∘ un dispositif (4) optique de détection de position ;
∘ un ensemble (5) de fixation de jumelles ;
∘ une visière mobile (6) ;
- des jumelles (7) détachables comportant un support (10) de fixation sur ledit arceau mécanique ; la visière mobile comportant deux axes de rotation (61) situés symétriquement de part et d'autre de l'arceau mécanique et à la hauteur du front de l'utilisateur, ladite visière ayant deux positions principales qui sont :
- une position d'utilisation basse, appliquée lorsque les jumelles ne sont pas montées dans leur support, dans cette position basse, la visière couvre le combineur et laisse découvert le dispositif optique de détection de position ;
- une position d'utilisation haute, appliquée lorsque les jumelles sont montées dans leur support, dans cette position haute, la visière est située sur le haut du casque et laisse découvert le dispositif optique de détection de position, ledit arceau mécanique étant monté sur ledit casque au moyen de deux ensembles de fixation (11) situés symétriquement de part et d'autre du casque, chaque ensemble de fixation comportant une entretoise d'épaisseur adaptée à la taille du casque de manière à ce que l'arceau mécanique soit de taille unique indépendamment du casque.

2. Système selon la revendication 1. **caractérisé en ce que** le dispositif de visualisation (3) comporte un écran plat d'affichage, sa source d'éclairage, une optique de collimation et un combineur optique (31) à expansion de pupille.

3. Système selon la revendication précédente, **caractérisé en ce que**, les jumelles (7) sont des jumelles de vision de nuit et comportent deux corps identiques (8), chaque corps comportant un oculaire, lorsque le support de fixation (10) des jumelles de vision de nuit est monté dans l'ensemble de fixation (5), le combineur à expansion de pupille se trouve entre un œil de l'utilisateur et un des deux oculaires.

4. Système selon l'une des revendications précédentes, **caractérisé en ce que** l'ensemble de fixation (5) des jumelles comporte une rainure en T (51) et **en ce que** le support de fixation (10) des jumelles comporte une glissière (12) adaptée à la rainure en T.

5. Système selon la revendication 4. **caractérisé en ce que** l'ensemble de fixation (5) des jumelles comporte une lame ressort (52) qui maintient la glissière lorsque celle-ci est engagée dans la rainure en T.

6. Système selon l'une des revendications 3 à 5, **caractérisé en ce que** les jumelles de vision de nuit comportent une alimentation électrique, celle-ci est intégrée au support de fixation.

7. Système selon l'une des revendications 3 à 5, **caractérisé en ce que** les jumelles de vision de nuit comportent une alimentation électrique, celle-ci est intégrée à l'arceau mécanique, l'ensemble de fixation comportant des moyens de connexion électrique.

8. Système selon l'une des revendications 3 à 5, **caractérisé en ce que** les jumelles de vision de nuit comportent une alimentation électrique, celle-ci est issue de l'alimentation électrique du dispositif de visualisation.

9. Système selon l'une des revendications précédentes, **caractérisé en ce que** le support (10) de fixation des jumelles comporte des moyens de réglage en translation vertical, des moyens de réglage en translation latéral ou en écart interpupillaire, des moyens de réglages en translation longitudinale et des moyens de réglage en rotation selon un axe parallèle à l'axe passant par les deux yeux.

10. Système selon la revendication 9, **caractérisé en ce qu'**au moins la course du réglage en translation longitudinale est suffisante pour permettre la mise en place de l'oculaire devant le combineur optique.

11. Système selon l'une des revendications précédentes, **caractérisé en ce que** le dispositif optique de détection de position (4) comporte une caméra disposée dans la partie haute de l'arceau mécanique.

## Patentansprüche

1. System, das dazu bestimmt ist, von einem Benutzer getragen zu werden, und das eine Anzeigevorrichtung aufweist, wobei das System Folgendes umfasst:
- einem Helm (1);
- einen mechanischen Bügel (2), der fest an dem vorderen Teil des Helms montiert ist, wobei der Bügel Folgendes aufweist:
∘ eine Anzeigevorrichtung (3), einen Kombinierer (31) aufweisend;
o eine optische Positionserkennungsvorrichtung (4);
∘ eine Befestigungsanordnung (5) für ein Fernglas;
o ein bewegliches Visier (6);
- ein abnehmbares Fernglas (7), umfassend eine Halterung (10) zur Befestigung an dem mechanischen Bügel;
wobei das bewegliche Visier zwei Drehachsen (61) aufweist, die symmetrisch zu beiden Seiten des mechanischen Bügels und auf der Höhe der Stirn des Benutzers liegen, wobei das Visier zwei Hauptpositionen aufweist, die wie folgt lauten:
- eine untere Benutzungsposition, die angewendet wird, wenn das Fernglas nicht in seiner Halterung montiert ist, wobei in dieser unteren Position das Visier den Kombinierer bedeckt und die optische Positionserkennungsvorrichtung unbedeckt lässt;
- eine obere Benutzungsposition, die angewendet wird, wenn das Fernglas in seiner Halterung montiert ist, wobei sich in dieser oberen Position das Visier auf der Oberseite des Helms befindet und die optische Positionserkennungsvorrichtung unbedeckt lässt, wobei der mechanische Bügel an dem Helm mittels zweier Befestigungsanordnungen (11) montiert ist, die symmetrisch auf beiden Seiten des Helms liegen, wobei jede Befestigungsanordnung einen Abstandhalter mit einer Dicke aufweist, die an die Größe des Helms angepasst ist, sodass der mechanische Bügel unabhängig von dem Helm eine Einheitsgröße aufweist.

2. System nach Anspruch 1, **dadurch gekennzeichnet, dass** die Anzeigevorrichtung (3) einen flachen Anzeigeschirm, seine Beleuchtungsquelle, eine Kollimationsoptik und einen optischen Kombinierer (31) mit Pupillenerweiterung aufweist.

3. System nach dem vorhergehenden Anspruch, **dadurch gekennzeichnet, dass** das Fernglas (7) ein Nachtsichtgerät ist und zwei identische Körper (8) aufweist, wobei jeder Körper ein Okular aufweist, wenn die Befestigungshalterung (10) des Nachtsichtgeräts in der Befestigungsanordnung (5) montiert ist, sich der Kombinierer mit Pupillenerweiterung zwischen einem Auge des Benutzers und einem der beiden Okulare befindet.

4. System nach einem der vorhergehenden Ansprüche, **dadurch gekennzeichnet, dass** die Befestigungsanordnung (5) des Fernglases eine T-Nut (51) aufweist und dass die Befestigungshalterung (10) des Fernglases eine an die T-Nut angepasste Gleitschiene (12) aufweist.

5. System nach Anspruch 4, **dadurch gekennzeichnet, dass** die Befestigungsanordnung (5) des Fernglases eine Blattfeder (52) aufweist, welche die Gleitschiene hält, wenn diese in die T-Nut eingreift.

6. System nach einem der Ansprüche 3 bis 5, **dadurch gekennzeichnet, dass** das Nachtsichtgerät eine Stromversorgung aufweist, die in die Befestigungshalterung integriert ist.

7. System nach einem der Ansprüche 3 bis 5, **dadurch gekennzeichnet, dass** das Nachtsichtgerät eine Stromversorgung aufweist, die in den mechanischen Bügel integriert ist, wobei die Befestigungsanordnung Mittel für den elektrischen Anschluss aufweist.

8. System nach einem der Ansprüche 3 bis 5, **dadurch gekennzeichnet, dass** das Nachtsichtgerät eine Stromversorgung umfasst, wobei diese aus der Stromversorgung der Anzeigevorrichtung stammt.

9. System nach einem der vorhergehenden Ansprüche, **dadurch gekennzeichnet, dass** die Befestigungshalterung (10) des Fernglases Mittel zur Einstellung der vertikalen Translation, Mittel zur Einstellung der seitlichen Translation oder des Pupillenabstands, Mittel zur Einstellung der Längstranslation und Mittel zur Einstellung der Drehung um eine Achse parallel zu der durch die beiden Augen verlaufenden Achse umfasst.

10. System nach Anspruch 9, **dadurch gekennzeichnet, dass** mindestens der Weg der Einstellung der Längstranslation ausreicht, um das Okular vor dem optischen Kombinierer zu positionieren.

11. System nach einem der vorhergehenden Ansprüche, **dadurch gekennzeichnet, dass** die optische Positionserkennungsvorrichtung (4) eine Kamera aufweist, die im oberen Teil des mechanischen Bügels angeordnet ist.

## Claims

1. A system intended to be worn by a user and containing a display device, said system comprising:
- a helmet (1);
- a mechanical arch (2) securely mounted on the front part of said helmet, said arch containing:
∘ a display device (3) containing a combiner (31);
∘ an optical position-detection device (4);
∘ a binocular attachment assembly (5);
∘ a movable visor (6);
- detachable binoculars (7) containing an attachment holder (10) for attachment to said mechanical arch;
the movable visor containing two axes of rotation (61) located symmetrically on either side of the mechanical arch and at the height of the user's forehead, said visor having two main positions which are as follows:
- a lower use position, applied when the binoculars are not mounted in their holder, the visor covering the combiner and leaving the optical position-detection device uncovered in this lower position;
- an upper use position, applied when the binoculars are mounted in their holder, the visor being located on the top of the helmet and leaving the optical position-detection device uncovered in this upper position.
said mechanical arch being mounted on said helmet by means of two attachment assemblies (11) located symmetrically on either side of the helmet, each attachment assembly having a spacer, the thickness of which is matched to the size of the helmet such that the mechanical arch is of one size, independently of the helmet.

2. The system according to claim 1, **characterised in that** the display device (3) contains a flat display screen, its light source, a collimating optic and a pupil-expansion optical combiner (31).

3. The system according to the preceding claim, **characterised in that** the binoculars (7) are night-vision binoculars and contain two identical bodies (8), each body containing an eyepiece, when the attachment holder (10) for attaching the night-vision binoculars is mounted in the attachment assembly (5), the pupil-expansion combiner being located between a user's eye and one of the two eyepieces.

4. The system according to one of the preceding claims, **characterised in that** the attachment assembly (5) for attaching the binoculars has a T-shaped groove (51) and **in that** the attachment holder (10) for attaching the binoculars has a slide (12) matched to the T-shaped groove.

5. System according to claim 4, **characterised in that** the attachment assembly (5) for attaching the binoculars contains a leaf spring (52) which holds the slide when the latter is engaged in the T-shaped groove.

6. The system according to one of claims 3 to 5, **characterised in that** the night-vision binoculars contain a power supply, the latter being integrated into the attachment holder.

7. The system according to one of claims 3 to 5, **characterised in that** the night-vision binoculars contain a power supply, the latter being integrated into the mechanical arch, the attachment assembly containing electrical connection means.

8. The system according to one of claims 3 to 5, **characterised in that** the night-vision binoculars contain a power supply, the latter coming from the power supply for the display device.

9. The system according to one of the preceding claims, **characterised in that** the attachment holder (10) for attaching the binoculars contains means for vertical translational adjustment, means for lateral translational adjustment or for interpupillary distance adjustment, means for longitudinal translational adjustment and means for rotational adjustment on an axis parallel to the axis passing through the two eyes.

10. The system according to claim 9, **characterised in that** at least the travel of the longitudinal translational adjustment is sufficient to allow the positioning of the eyepiece in front of the optical combiner.

11. The system according to one of the preceding claims, **characterised in that** the optical position-detection device (4) contains a camera arranged in the top part of the mechanical arch.
